# FASCICULE DE BREVET EUROPEEN

(11) **EP 0 499 498 B1**
(45) Date de publication et mention de la délivrance du brevet: **10.07.1996**
(21) Numéro de dépôt: 92400080.5
(22) Date de dépôt: 13.01.1992
(51) Int. Cl.: F16K 31/143

(54) **Vanne d'arrêt en pression à commande manuelle et pneumatique**
Manuell und pneumatisch betätigbare Absperrarmatur
Manually and pneumatically operable shut-off valve

(30) Priorité: 15.02.1991 FR 9101825
(43) Date de publication de la demande: 19.08.1992
(73) Titulaire: TOTAL Société anonyme dite :, F-92800 Puteaux (FR)
(72) Inventeur: Besnier, Jean-François, F-78830 Bullion (FR); Quenault, Gérard, F-91470 Limours (FR)
(74) Mandataire: Jolly, Jean-Pierre

(56) Documents cités:
- US-A- 3 503 586
- US-A- 4 149 699
- US-A- 4 180 237

## Description

La présente invention a pour objet une vanne d'arrêt destinée, par exemple mais non exclusivement, à effectuer en laboratoire des raccordements de tubages pour la circulation de fluides, telle qu'eau, huile, gaz , à des pressions relativement élevées, de l'ordre de 7. 10⁷ Pa, qui présente en outre une étanchéité et une fiabilité parfaites et qui puisse être commandée aussi bien manuellement que pneumatiquement.

On connaît déjà plusieurs types de vannes d'arrêt fonctionnant en pression, parmi lesquelles on peut citer : les vannes pneumatiques assistées, telles que les vérins linéaires à simple effet sur pointeau, les vannes manuelles à pointeau rotatif, les vannes manuelles quart de tour à boisseau sphérique, les électrovannes haute pression et les vannes à boisseau motorisées.

Mais toutes ces vannes présentent des défauts majeurs :
- ainsi, les vannes pneumatiques ont des défauts de fiabilité : leur étanchéité se perd rapidement, probablement en raison de l'impossibilité à trouver un ressort d'appui sur le pointeau, suffisamment performant pour que l'étanchéité soit conservée quelle que soit la pression dans le circuit. Une vanne de ce type est illustrée par exemple par le brevet US-A-4 180 237 ;
- les vannes manuelles à pointeau rotatif fonctionnent correctement mais elles ne sont pas automatiques. De plus, elles s'usent plus ou moins rapidement selon le couple exercé par l'opérateur sur le pointeau ; des exemples de vannes de ce type sont décrits dans les brevets US-A-3 503 586 et US-A-4 149 699 qui tous deux forment la base du préambule de la revendication 1 ;
- les vannes à boisseau sont pourvues d'un joint qui nuit à la tenue dans le temps, en particulier en présence de pression et de fluides corrosifs pétroliers, et d'autre part, elles sont limitées en pression ;
- les électrovannes sont elles aussi limitées en pression, et d'autre part, pour des raisons de sécurité, elles ne peuvent pas être utilisées dans les laboratoires pétroliers, car l'usage de l'électricité pour la commande des vannes doit y être évité ;
- les vannes à boisseau motorisées ont une commande sophistiquée, nécessitant un apport d'électricité pour la commande et un temps de réponse long ;
- enfin toutes ces vannes ont l'inconvénient d'être soit manuelles, soit automatiques. Lorsqu'une vanne exclusivement automatique est défectueuse, elle doit être doublée par une autre vanne automatique ou manuelle, ce qui entraîne une perte de temps et augmente l'encombrement de l'installation.

La présente invention vise à remédier à tous ces inconvénients des vannes de la technique antérieure et propose à cet effet une vanne d'arrêt pour fluides en pression, du type comprenant un corps de vanne pourvu d'un orifice d'entrée du fluide, d'un orifice de sortie du fluide et d'un pointeau rotatif pouvant être déplacé entre une position d'ouverture pour laquelle les orifices d'entrée et de sortie communiquent entre eux, et une position de fermeture pour laquelle la communication entre lesdits orifices est coupée, ledit pointeau étant pourvu d'un filetage en prise avec un taraudage formé sur le corps de vanne, le pointeau étant entraîné en mouvement combiné rotatif et axial par des moyens d'entraînement rotatifs pourvus d'une commande manuelle, caractérisée en ce que lesdits moyens d'entraînement sont également pourvus d'une commande pneumatique automatique.

Les moyens d'entraînement peuvent être constitués par un vérin rotatif à commande pneumatique ou hydraulique et muni d'une poignée permettant de l'entraîner manuellement en rotation.

En position fermée, le pointeau est en bout de course axiale et coupe la communication entre les orifices d'entrée et de sortie.

Sur le pointeau est usinée une partie cylindrique pourvue sur sa paroi extérieure d'un filetage destiné à se visser dans ledit taraudage, une extrémité du pointeau étant conformée pour obturer un siège formé dans un passage reliant les orifices d'entrée et de sortie.
L'autre extremité du pointeau est constituée par une pièce de liaison solidaire en rotation avec l'arbre rotatif du vérin, tout en autorisant le libre déplacement axial du pointeau par rapport audit arbre.

Ladite pièce de liaison est en forme de coupelle comprenant une paroi latérale cylindrique entaillée de fentes axiales diamétralement opposées, dans lesquelles sont reçues avec jeu les extrémités d'une clavette traversant radialement l'extrémité de l'arbre rotatif du vérin, opposée à celle qui est munie de la poignée.

Avantageusement, le vérin rotatif est muni de moyens de limitation de course qui permettent de passer de la position ouverte de 'la vanne à la position fermée ou vice-versa en faisant tourner le pointeau d'un angle prédéterminé, par exemple trois quart de tour.

A la mise en service de la vanne, l'action du vérin est dosée de manière à obtenir une bonne étanchéité de la fermeture au niveau du siège, sans que cela entraîne de détérioration de ce dernier. Dès lors, le couple de serrage qui s'exerce à chaque action est reproductible sans risque de détériorer le siège du pointeau.

De plus, un avantage important de cette vanne réside dans le fait qu'elle peut être actionnée aussi bien manuellement qu'automatiquement.

Un mode de réalisation de l'invention sera décrit à présent, à titre d'exemple non limitatif, en regard des dessins annexés dans lesquels :
la figure 1 est une vue en coupe axiale de la vanne rotative en position fermée ;
la figure 2 montre la vanne en position ouverte,
la figure 3 est une vue en coupe éclatée du corps de vanne et du pointeau ; et
la figure 4 est une vue en perspective partielle d'un détail de la figure 3.

La vanne comprend un carter 10 formé d'une virole cylindrique 12 obturée à ses extrémités par une paroi de fond 16 et par un couvercle 14 fixés sur la virole au moyen de vis 18.

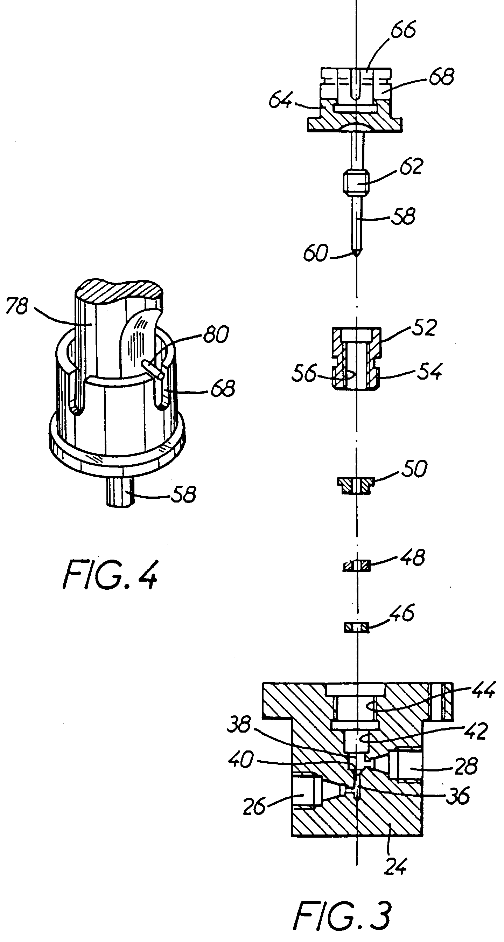

La paroi de fond présente une ouverture axiale 20 dans laquelle est fixé, au moyen de vis 22, un corps de vanne 24, clairement illustré à la figure 3. Le corps de vanne comporte un orifice radial d'entrée 26 (ou 28) et un orifice radial de sortie 28 (ou 26) décalés axialement l'un par rapport à l'autre. A ces orifices peuvent être raccordés, au moyen d'écrous 30, respectivement un conduit d'amenée de fluide 32 (ou 34) et un conduit de sortie de fluide 34 (ou 32). Les orifices d'entrée 26 (ou 28) et de sortie 28 (ou 26) débouchent respectivement dans deux canaux axiaux 36, 38, le canal 38 étant dans le prolongement au-dessus du canal 36 et ayant un plus grand diamètre que ce dernier, de sorte qu'un siège 40 est formé au niveau du raccordement entre les deux canaux.

Le canal 38 se prolonge vers le haut par un perçage 42 de plus grand diamètre et par un alésage 44 encore plus évasé qui reçoivent respectivement un dispositif d'étanchéité presse-étoupe 46, 48, 50 et une pièce tubulaire de serrage 52 pourvue d'un filetage extérieur 54 en prise avec l'alésage 44 et d'un taraudage intérieur 56.

Une fois assemblées, au corps de vanne 24, la pièce de serrage 52 et les pièces 46, 48, 50 du presse-étoupe forment un passage axial continu, aligné avec les canaux 38 et 36. Dans ce passage et ces canaux est reçu un pointeau 58. Celui-ci, qui est clairement illustré à la figure 3, se termine en une pointe 60 susceptible de s'appuyer sur le siège 40.

Sur le pointeau est usinée une partie cylindrique 62 filetée sur sa paroi extérieure de manière à pouvoir se visser dans le taraudage 56 de la pièce tubulaire de serrage 52. L'autre extrémité du pointeau est constituée par une pièce de liaison 64 en forme de coupelle qui comporte une paroi latérale tubulaire 66 entaillée de fentes axiales 68 diamétralement opposées (Figure 4).

L'ensemble du pointeau 58 et de la pièce de liaison 64 est entraîné en rotation par un vérin rotatif pneumatique ou hydraulique 70 qui est fixé au couvercle 14 au moyen de vis 72, coaxialement avec le pointeau.

Le vérin est commandé par un gaz sous pression, par exemple de l'air comprimé, arrivant par une tubulure coaxiale 74 et un raccord coaxial 75 qui véhiculent respectivement, dans leurs passages coaxiaux, de l'air comprimé à deux pressions différentes. Ces pressions sont communiquées respectivement par des conduits flexibles 77, 79, à deux raccords 81, 83 de la vanne. L'envoi de la pression sur l'un ou l'autre des raccords 81, 83 permet de maintenir la vanne en position normalement ouverte ou normalement fermée. L'action d'ouverture ou de fermeture se fait alors en envoyant à l'autre raccord du fluide à une pression supérieure.

L'arbre rotatif du vérin est pourvu à son extrémité 78 d'un perçage diamétral dans lequel est insérée une clavette 80. Les extrémités de cette dernière sont reçues librement dans les fentes 68.

L'autre extrémité de l'arbre rotatif du vérin est munie d'une poignée 82 grâce à laquelle on peut faire tourner l'arbre à la main.

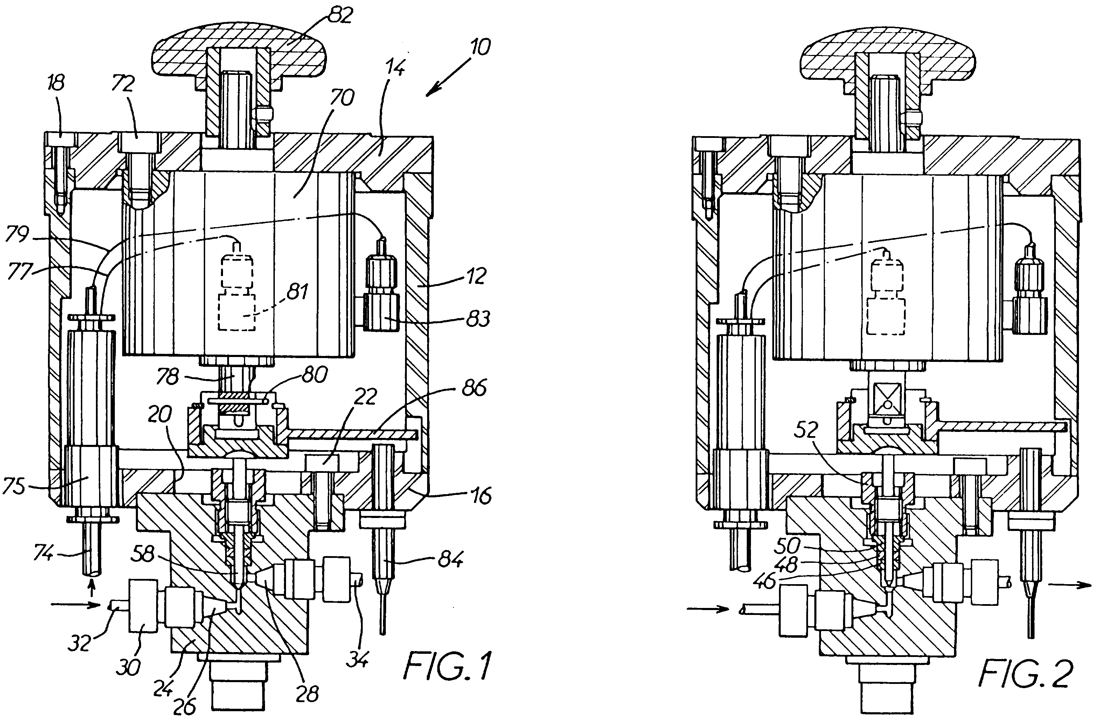

On expliquera à présent le fonctionnement de la vanne: la figure 1 montre la vanne en position fermée. Le pointeau 58 est appliqué sur le siège 40 et obture ainsi le canal 36. Le fluide arrivant par la conduite d'entrée 32 (ou 34) ne peut donc être communiqué à la conduite de sortie 34 (ou 32).

Lors du montage de la vanne, on règle la position de fermeture en amenant à la main le pointeau 58 en position basse de la figure 1, puis l'on réalise la liaison entre le pointeau et l'arbre 78 du vérin au moyen de la clavette 80.

Pour ouvrir la vanne, on doit faire tourner l'arbre 78 du vérin 70, soit à la main à l'aide de la poignée 82, soit automatiquement en envoyant de l'air comprimé, par exemple dans le raccord 81. Dans un cas comme dans l'autre, l'arbre 78 entraîne en rotation l'ensemble pièce de liaison 64 - pointeau 58 par l'intermédiaire de la clavette 80. Le sens de rotation est tel que la partie cylindrique filetée 62 du pointeau se dévisse dans la pièce tubulaire 52 et que l'ensemble 58, 64 se déplace vers le haut, ce qui est possible puisque les extrémités de la clavette 80 se trouvent dans les fentes axiales 68. L'amplitude de la rotation est réglée pour que le pointeau 58 s'éloigne suffisamment du siège 40 pour que la communication soit établie entre les orifices d'entrée 26 (ou 28) et de sortie 28 (ou 26) du corps de vanne. Par exemple, à partir de la fermeture, l'ouverture de la vanne est obtenue en faisant tourner le vérin d'un angle prédéterminé, par exemple de trois quart de tour.

Pour fermer la vanne, on envoie de l'air comprimé à une pression plus élevée dans le raccord 83.

La vanne est munie d'un détecteur de proximité (84) capable de détecter l'ouverture et la fermeture de la vanne. Ce détecteur, qui 'est fixé dans le fond 16 de la vanne, peut être du type capacitif. Il détecte la position haute ou basse d'un leurre 86 se déplaçant axialement avec le pointeau, mais pas en rotation.

L'invention a donc permis de réaliser une vanne d'arrêt d'une grande fiabilité puisque la fermeture est parfaitement étanche et reproductible. Grâce au dosage du couple de serrage, le pointeau peut s'appliquer sur le siège sans le détériorer. Cette vanne peut fonctionner à des pressions élevées, de l'ordre de 7. 10⁷ Pa et être actionnée aussi bien manuellement qu'automatiquement. Elle peut également être équipée d'un détecteur de proximité contrôlant les positions ouverte et fermée de la vanne.

## Revendications

1. Vanne d'arrêt pour fluide en pression, du type comprenant un corps de vanne (24) pourvu d'un orifice d'entrée de fluide (26 ou 28), d'un orifice de sortie de fluide (28 ou 26) et d'un pointeau rotatif (58) pouvant être déplacé entre une position d'ouverture pour laquelle les orifices d'entrée et de sortie communiquent entre eux, et une position de fermeture pour laquelle la communication entre lesdits orifices est coupée, ledit pointeau (58) étant pourvu d'un filetage en prise avec un taraudage (56) formé sur le corps de vanne, le pointeau étant entraîné en mouvement combiné rotatif et axial par des moyens d'entraînement rotatifs (70) pourvus d'une commande manuelle (82) caractérisée en ce que lesdits moyens d'entraînement rotatifs sont pourvus également d'une commande pneumatique automatique (74).

2. Vanne d'arrêt selon la revendication 1, caractérisée en ce que lesdits moyens d'entraînement sont constitués par un vérin rotatif (70).

3. Vanne d'arrêt selon la revendication 2, caractérisée en ce que le vérin rotatif est muni à une extrémité de son arbre d'une poignée (82) permettant de l'entraîner manuellement en rotation.

4. Vanne d'arrêt selon la revendication 1, caractérisé en ce que sur le pointeau (58) est usinée une partie cylindrique (62) pourvue sur sa paroi extérieure d'un filetage destiné à se visser dans ledit taraudage (56), une extrémité (60) du pointeau étant conformée pour obturer un siège (40) formé dans un passage reliant les orifices d'entrée (26) et de sortie (28).

5. Vanne d'arrêt selon la revendication 2, caractérisée en ce que l'autre extrémité du pointeau est constituée par une pièce de liaison (64) solidaire en rotation avec l'arbre rotatif (78) du vérin, tout en autorisant le libre déplacement axial du pointeau par rapport audit arbre.

6. Vanne d'arrêt selon la revendication 5, caractérisée en ce que ladite pièce de liaison est en forme de coupelle comprenant une 'paroi latérale cylindrique (66) entaillée de fentes axiales (68) diamétralement opposées dans lesquelles sont reçues avec jeu les extrémités d'une clavette (80) traversant radialement l'extrémité de l'arbre rotatif du vérin, opposée à celle qui est munie de la poignée (82).

7. Vanne d'arrêt selon la revendication 1, caractérisée en ce que le vérin rotatif (70) est muni de moyens de limitation de course qui permettent de passer de la position ouverte de la vanne à la position fermée ou vice-versa en faisant tourner le pointeau d'un angle prédéterminé, par exemple trois quart de tour.

8. Vanne d'arrêt selon la revendication 1, caractérisée en ce qu'elle comprend un corps de vanne (24) sur lequel sont formés des orifices d'entrée (26 ou 28) et de sortie (28 ou 26) décalés axialement, ces derniers débouchant respectivement dans deux canaux axiaux (36, 38), le canal (38) étant dans le prolongement au-dessus du canal (36) et ayant un plus grand diamètre que ce dernier, de sorte qu'un siège (40) est formé pour le pointeau au niveau du raccordement entre les deux canaux.

9. Vanne d'arrêt selon la revendication 8, caractérisée en ce que dans ledit canal (38) sont montés un dispositif d'étanchéité presse-étoupe (46, 48, 50), et une pièce de serrage (52) servant à comprimer ce dernier et pourvue d'un taraudage intérieur (56) dans lequel vient se visser la partie cylindrique filetée (62) du pointeau.

10. Vanne d'arrêt selon la revendication 1, caractérisée en ce qu'elle est équipée d'un détecteur de proximité (84) capable de détecter l'ouverture et la fermeture de la vanne.

11. Vanne d'arrêt selon la revendication 10, caractérisée en ce que le détecteur de proximité (84), qui peut être du type capacitf, est fixé dans le fond (16) de la vanne et est susceptible de détecter la position haute ou basse d'un leurre (86) se déplaçant axialement avec le pointeau (58) .

## Patentansprüche

1. Absperrarmatur für unter Druck stehendes Fluid, mit einem Ventilkörper (24), der eine Fluid-Einlaßöffnung (26 oder 28), eine Fluid-Auslaßöffnung (28 oder 26) und einen drehbaren Stift (58) aufweist, der zwischen einer die Einlaß- und Auslaßöffnungen miteinander verbindenden Öffnungsstellung und einer die Verbindung zwischen den Öffnungen absperrenden Schließstellung verstellbar ist, wobei der Stift (58) ein mit einem im Ventilkörper enthaltenen Innengewinde (56) in Eingriff stehendes Außengewinde aufweist sowie durch mit einer manuellen Steuerung (82) versehene Dreh-Antriebsmittel (70) zu einer kombinierten rotierenden und axialen Bewegung angetrieben ist,
**dadurch gekennzeichnet,**
daß die Dreh-Antriebsmittel gleichermaßen mit einer automatischen Pneumatiksteuerung (74) versehen sind.

2. Absperrarmatur nach Anspruch 1, dadurch gekennzeichnet, daß die Antriebsmittel durch einen drehenden Antriebszylinder (70) gebildet sind.

3. Absperrarmatur nach Anspruch 2, dadurch gekennzeichnet, daß der drehende Antriebszylinder an einem Ende seiner Welle mit einem Handknauf (82) versehen ist, durch den er von Hand drehend angetrieben werden kann.

4. Absperrarmatur nach Anspruch 1, dadurch gekennzeichnet, daß auf dem Stift (58) durch Bearbeitung ein zylindrischer Abschnitt (62) vorgesehen ist, der an seinem Außenumfang ein Gewinde trägt, das in das Innengewinde / Gewindebohrung (56) einschraubbar ist, wobei ein Ende (60) des Stiftes zum Verschließen einer Sitzfläche (40) geformt ist, die in einem die Einlaß- und Auslaßöffnungen (26 bzw. 28) verbindenden Durchlaß vorgesehen ist.

5. Absperrarmatur nach Anspruch 2, dadurch gekennzeichnet, daß das andere Ende des Stiftes durch ein Schlußstück (64) gebildet ist, das mit der drehbaren Welle (78) des Zylinders in drehfester Verbindung steht, jedoch eine unbehinderte Axialbewegung des Stiftes bezüglich der Welle zuläßt.

6. Absperrarmatur nach Anspruch 5, dadurch gekennzeichnet, daß das Anschlußstück die Form einer Schale hat, die eine zylindrische Seitenwand (66) mit herausgearbeiteten, diametral gegenüberliegenden axialen Ausnehmungen (68) aufweist, in denen die Enden eines Bolzens (18) mit Spiel aufgenommen sind, der das Ende der drehbaren Welle des Zylinders radial durchsetzt, das dem mit dem Handknauf (82) versehenen Ende entgegengesetzt ist.

7. Absperrarmatur nach Anspruch 1, dadurch gekennzeichnet, daß der drehende Antriebszylinder (70) Hubbegrenzungsmittel aufweist, die einen Übergang von der Offenstellung der Armatur in die Schließstellung oder umgekehrt ermöglichen, indem der Stift um einen vorbestimmten Winkel, beispielsweise um eine Dreivierteldrehung, gedreht wird.

8. Absperrarmatur nach Anspruch 1, dadurch gekennzeichnet, daß sie einen Ventilkörper (24) aufweist, auf dem Einlaßöffnungen (26 oder 28) und Auslaßöffnungen (28 oder 26) zueinander axial versetzt angeordnet sind, die in zwei Axialkanäle (36, 38) münden, von denen der Kanal (38) sich in der Verlängerung oberhalb des Kanals (36) befindet und einen größeren Durchmesser als der letztere aufweist, so daß in Höhe des Überganges der beiden Kanäle eine Sitzfläche (40) für den Stift gebildet ist.

9. Absperrarmatur nach Anspruch 8, dadurch gekennzeichnet, daß in dem Kanal (38) eine Stopfbuchsen-Abdichteinrichtung (46, 48, 50) sowie ein zu deren Zusammenpressen dienendes Spannstück (52) angeordnet sind, das eine Gewindebohrung (56) enthält, in die der zylindrische Gewindeabschnitt (62) des Stiftes eingeschraubi ist.

10. Absperrarmatur nach Anspruch 1, dadurch gekennzeichnet, daß sie mit einen Näherungsfühler (84) aufweist, der die Offenstellung und die Schließstellung der Armatur festzustellen in der Lage ist.

11. Absperrarmatur nach Anspruch 10, dadurch gekennzeichnet, daß der Näherungsfühler (84), der kapazitiver Bauart sein kann, im Boden (16) der Armatur befestigt und befähigt ist, die obere oder untere Stellung eines sich in Axialrichtung mit dem Stift (58) verstellenden Bezugsgliedes (86) zu ermitteln.

## Claims

1. Stop valve for pressurized fluid, of the type comprising a valve body (24) provided with a fluid inlet orifice (26 or 28), a fluid outlet orifice (28 or 26) and a rotary needle (58) able to be moved between an open position in which the inlet and outlet orifices communicate with each other, and a closed position in which communication between the said orifices is cut off, the said needle (58) being provided with a thread engaging with a female thread (56) formed on the valve body, the needle being driven in a combined rotary and axial movement by rotary drive means (70) provided with a manual control (82) characterised in that the said rotary drive means are also provided with an automatic pneumatic control (74).

2. Stop valve according to Claim 1, characterised in that the said drive means consist of a rotary ram (70).

3. Stop valve according to Claim 2, characterised in that the rotary ram is provided at one end of its shaft with a handle (82) enabling it to be rotated manually.

4. Stop valve according to Claim 1, characterised in that on the needle (58) there is machined a cylindrical part (62) provided on its external wall with a thread designed to be screwed into the said female thread (56), one end (60) of the needle being formed so as to close off a seating (40) formed in a passage connecting the inlet (26) and outlet (28) orifices.

5. Stop valve according to Claim 2, characterised in that the other end of the needle consists of a connecting piece (64) fixed with respect to rotation to the rotary shaft (78) of the ram, while allowing the free axial movement of the needle with respect to the said shaft.

6. Stop valve according to Claim 5, characterised in that the said connecting piece is in the shape of a cup comprising a cylindrical lateral wall (66) notched with diametrically opposed axial slots (68) in which the ends of a key (80) passing radially through the end of the rotary shaft of the ram, opposite the one provided with the handle (82), are received with clearance.

7. Stop valve according to Claim 1, characterised in that the rotary ram (70) is provided with travel limitation means which enable passage from the open position of the valve to the closed position or vice versa by turning the needle through a predetermined angle, for example three quarters of a turn.

8. Stop valve according to Claim 1, characterised in that it comprises a valve body (24) on which there are formed axially offset inlet (26 or 28) and outlet (28 or 26) orifices, these opening out respectively into two axial channels (36, 38), the channel (38) being in line above the channel (36) and having a larger diameter than the latter, so that a seating (40) is formed for the needle at the point where the two channels are connected to each other.

9. Stop valve according to Claim 8, characterised in that in the said channel (38) there are mounted a packing-gland sealing device (46, 48, 50) and a clamping piece (52) serving to compress the latter and provided with an internal female thread (56) into which the threaded cylindrical part (62) of the needle is screwed.

10. Stop valve according to Claim 1, characterised in that it is equipped with a proximity detector (84) capable of detecting the opening and closing of the valve.

11. Stop valve according to Claim 10, characterised in that the proximity detector (84), which can be of the capacitive type, is fixed in the bottom (16) of the valve and is able to detect the high or low position of a jig (86) moving axially with the needle (58).
